# EUROPEAN PATENT SPECIFICATION

(11) **EP 2 998 055 B1**
(45) Date of publication and mention of the grant of the patent: **02.01.2019**
(21) Application number: 13852353.5
(22) Date of filing: 20.05.2013
(51) Int. Cl.: B23K 11/34, B23K 11/16, B23K 11/14, B23K 103/16, B23K 101/00, B23K 11/11, C23C 2/12, B23K 101/18, B23K 101/34, B23K 103/04

(54) **METHOD OF IMPROVING WELDABILITY OF HOT STAMPING PARTS**
VERFAHREN ZUR VERBESSERUNG DER SCHWEISSBARKEIT VON HEISSSTANZTEILEN
PROCÉDÉ D'AMÉLIORATION DE LA SOUDABILITÉ DE PARTIES D'ESTAMPAGE À CHAUD

(30) Priority: 13.05.2013 KR 20130053887
(43) Date of publication of application: 23.03.2016
(73) Proprietor: Hyundai Steel Company, Incheon 401-712 (KR)
(72) Inventor: NAM, Seung-Man, Dangjin-si Chungcheongnam-do 343-090 (KR); PARK, Young-Chul, Seoul 131-848 (KR)
(74) Representative: Zacco Sweden AB
(86) International application number: PCT/KR2013/004392
(87) International publication number: WO 2014/185574

(56) References cited:
- EP-A1- 0 927 595
- EP-A2- 2 233 598
- DE-A1-102011 050 316
- JP-A- H10 235 479
- JP-A- 2002 224 849
- JP-A- 2005 088 029
- JP-A- 2007 125 602
- JP-A- 2008 219 189
- KR-A- 20110 042 372
- US-A1- 2006 121 305
- H. KARBASIAN ET AL: "A review on hot stamping", JOURNAL OF MATERIALS PROCESSING TECHNOLOGY, vol. 210, no. 15, 1 November 2010 (2010-11-01), pages 2103-2118, XP055141086, ISSN: 0924-0136, DOI: 10.1016/j.jmatprotec.2010.07.019
- Eva Schmidova: "MATERIAL ANALYSES OF HIGH STRENGTH STEELS FOR AUTOMOTIVE SAFETY PARTS", SCIENTIFIC PAPERS OF THE UNIVERSITY OF PARDUBICE, Series B, The Jan Perner Transport Faculty 18, 2012, pages 183-193, XP002757262, Retrieved from the Internet: URL:http://dspace.upce.cz/bitstream/handle /10195/54118/SchmidovaE_MaterialAnalyses_2 013.pdf?sequence=1 [retrieved on 2016-05-03]

## Description

### [Technical Field]

The present invention relates to a method for improving the weldability of hot stamping parts with AL-SI plating having low weldability due to surface oxides.

### [Background Art]

Hot stamping technology is conducted at high temperatures contrary to prior press forming, which is conducted at cold states.

Since elongation of materials greatly increases at high temperatures, there are advantages of having no special constraints in formability and super high strength from effect of heat treatment.

But, since hot stamping is conducted in high temperatures of 900°C or higher, safety of materials at high temperatures is very important, and plated steel sheets are normally used for this reason.

Currently, Al-Si plated steel sheets are typically used for materials for hot stamping, and recently, research to use GA plated steel sheets, with lower prices, is being actively conducted, but many limitations exist due to technological limitations such as evaporation of plated layers at high temperatures, generation of oxide films, etc.

But, in the case of hot stamping parts using Al-Si plated steel sheets, problems of surface weldablity degrading due to surface oxides exist. Prior art document EP2233598 discloses the removal of the surface oxide layer from a stamped steel sheet while keeping the plating layer substantially intact.

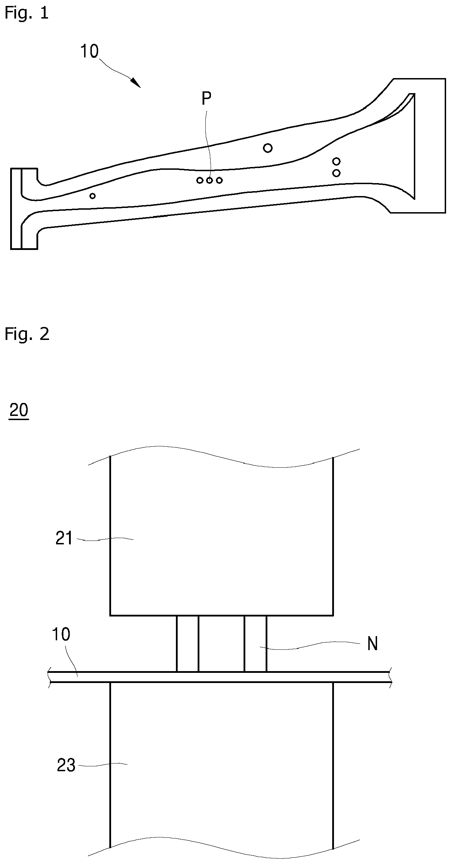

FIG. 1 is an exemplary drawing showing a center-pillar of an automobile as a hot stamping part. Illustrated center-pillar is an Al-Si plated hot stamping part, and a number of nuts are welded at each set positions (P) in the center-pillar (10). And this nut welding is conducted using a projection welding method.

FIG. 2 is a simplified drawing showing an image of a nut welding through a center-pillar of an automobile as a hot stamping part using projection welding. As shown, a hot stamping part, i.e. a center-pillar (10) is placed between a pair of welding electrodes (21, 23) facing each other in a projection welding device (20), and current is applied with a nut (N) inserted. And thus a resistance welding is performed between a hot stamping part and a nut.

But, situations where nuts welded with this method easily detaching occurred frequently. And as a reason for this faulty welding, the fact that surface oxides of Al-Si plated hot stamping parts degrade surface weldability was confirmed.

Korean Patent No. 760152 (published on September 18, 2007) is a related prior art, and a method for manufacturing high strength automobile parts from zinc plated steel sheets by using hot stamping is posted in the prior document.

### [Disclosure]

### [Technical Problem]

The present invention provides a method for improving the weldability of hot stamping parts with Al-Si plating with degraded weldability of nuts due to surface oxides.

### [Technical Solution]

In accordance with an embodiment of the present invention, a method for improving the weldability of hot stamping parts comprising : selecting a welding region in a hot stamping part with a surface oxide layer formed by hot stamping an Al-Si plated steel sheet; removing surface oxide of the welding region; removing remnant of oxide layer and portion of plating layer of the welding region; and performing welding on a welding region on a hot stamping part with remnant of oxide layer and portion of plating layer removed is provided.

The hot stamping part is a material of Al-Si plated steel sheet and welding may be performed on the welding region using projection welding.

The hot stamping part is a material of Al-Si plated steel sheet and welding may be performed on the welding region using projection welding, and a grinder may be used or laser grinder may be used when removing surface oxide and removing remnant of oxide layer and portion of plating layer.

### [Advantageous Effects]

When welding (i.e. nut welding) is required on hot stamping parts using Al-Si plated steel sheets, removing, in advance, sectional oxide layer and/or plating layer corresponding to a region to be welded may be performed and improve weldability of hot stamping parts.

Grinder devices may be used or laser devices may be used to remove sectional oxide and/or plating layer corresponding to welding region of hot stamping parts.

Especially, when removing only sectional surface oxide layer corresponding to a welding region of hot stamping parts before welding (i.e. nut welding), improvement of weldability is small but plating layer remains as is and high corrosion resistance is obtainable.

When removing a section of oxide layer and portion of plating layer corresponding to a welding region of these hot stamping parts, effect of high improvement of weldability may appear while obtaining corrosion resistance at a certain level.

When removing a section of oxide layer and entire plating layer corresponding to a welding region of hot stamping parts, effect of improvement of weldability may be maximized but corrosion resistance relatively degrades.

### [Description of Drawings]

FIG. 1 is a simplified exemplary drawing showing a center-pillar of an automobile as a hot stamping part.
FIG. 2 is a simplified drawing showing an image of a nut welding on a center-pillar using projection welding.
FIG. 3 is a cross sectional view of a hot stamping part according to an embodiment of the present invention.
FIG. 4 is a flow chart of a method which is not part of the present invention.
FIG. 5 is a cross sectional view showing an image with only surface oxide layer removed.
FIG. 6 is a flow chart of a method for improving the weldability of hot stamping parts according to the present invention.
FIG. 7 is a cross sectional view showing an image with portion of surface oxide layer and plating layer removed through a method for improving the weldability of hot stamping parts according to example 2 of the present invention.
FIG. 8 is a flow chart of a method which is not part of the present invention.
FIG. 9 is a cross sectional view showing an image with entire surface oxide layer and plating layer removed.

### [Best Mode]

Hot stamping technology is conducted at high temperatures contrary to prior press forming, which is conducted at a cold state. Since elongation of materials greatly increases at high temperatures, there are advantages of having no special constraints in formability and super high strength from effect of heat treatment. But, since hot stamping is conducted in high temperatures of 900°C or higher, safety of materials at high temperature is very important, and plated steel sheets are normally used for this reason.

But, in the case of hot stamping parts using Al-Si plated steel sheets, problems of surface weldablity degrading due to surface oxides exist.

A method for improving the weldability of hot stamping parts in accordance with an embodiment of the present invention is provided to solve the described problems.

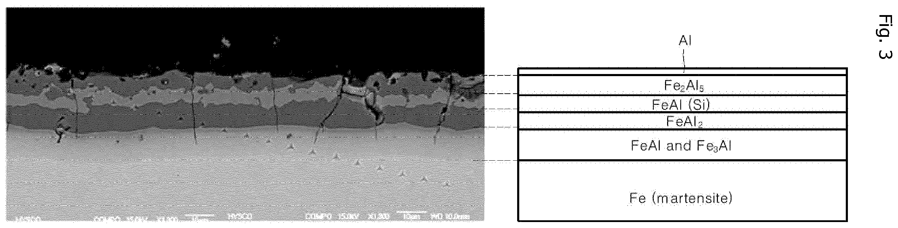

FIG. 3 is a cross sectional view of a hot stamping part according to an embodiment of the present invention.

Referring to FIG. 3, a hot stamping part with Al-Si plated steel sheet as its material, from the bottom going up, Fe(martensite), FeAl and Fe3AI, FeAI2, FeAI(Si), Fe2AI5 is laminated, and a Al surface oxide layer with about 5 ∼ 100nm thickness is formed on the surface. But, the surface oxide layer degrades the weldability of hot stamping parts with Al-Si plated steel sheet as its material.

Specifically, a center-pillar (10 of FIG.1) among hot stamping parts with Al-Si plated steel sheet its material is used as an example.

Center-pillar is a part for automobiles, and a number of nuts are combined through projection welding for each interior set position. But, surface oxide layer, same as above, exist on the surface of a center-pillar, where Al-Si plated steel sheet is provided through a hot stamping process, and thus situations where welded nuts easily detaching occur frequently.

Hereinafter, a method for improving the weldability of hot stamping parts in accordance with an embodiment of the present invention is described in detail with reference to accompanying drawings.

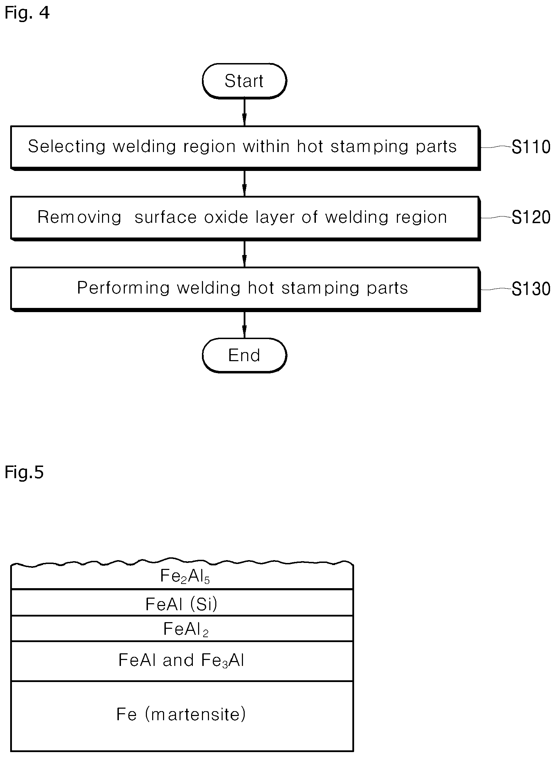

FIG. 4 is a flow chart of a method which is not part of the present invention.

Selecting welding region step (S110) is a step where a welding region on a hot stamping part manufactured with an Al-Si plated steel sheet is selected.

For a detailed example, a center-pillar (10 of FIG.1), which is an example of a hot stamping part, shown in FIG. 1 may be referred.

Positions (P) where a number of nuts (not shown) are to be welded inside a center-pillar (10 of FIG.1) are determined, and a welding region may be selected limited to a surrounding of these areas.

But, this welding region may differ according to type, size, etc. of a hot stamping part, and may be selected in different shapes according to characteristics of the corresponding part.

But in the case of hot stamping parts with Al-Si plated steel sheets as its material, Al oxide layer (this is referred to as "surface oxide layer") is formed on the surface, and this surface oxide layer is a reason for degrading weldability of parts. Therefore, this is removed in the removing surface oxide layer step (S120) described below.

Removing surface oxide layer step (S120) is a step removing surface oxide layer of a welding region of a hot stamping part.

In this step, a method mechanically removing surface oxide layer using grinders may be used.

Also, surface oxide layer may be removed using laser devices.

Since grinding methods using grinders and grinding methods using laser devices are well known technologies, additional descriptions will be skipped.

Through the removing surface oxide layer step (S120), Al oxide layer formed on a surface of hot stamping parts with Al-Si plated steel sheets as its material is effectively removed, and thickness of surface oxide layer is formed between about 5 to 100nm.

A simplified cross sectional structure of a hot stamping part with the surface oxide layer removed may be identified referring to FIG. 5.

As shown in FIG. 5, surface oxide layer of a hot stamping part is removed, and only Fe(martensite), FeAl and Fe₃Al, FeAl₂, FeAl(Si), Fe₂Al₅ is shown in the cross sectional view.

Welding step (S130) is a step where welding is performed on a welding region of a hot stamping part with surface oxide layer removed from the previous step.

For a detailed example of a hot stamping part, when referring to a center-pillar (10 of FIG. 1) shown in FIG. 1, after removing surface oxide layer through a position (P) i.e. a welding region, where a number of nuts are to be welded through an interior of a center-pillar, projection welding is performed between a center-pillar and a nut.

Likewise, by the described method, and after removing only surface oxide layer corresponding to a welding region of a hot stamping part, even though the method for performing welding has a relatively low effect of improvement of weldability compared to examples that will be described below, relatively high corrosion resistance may be obtained.

Therefore, a method for improving the weldability of hot stamping parts according to above described example 1 may be applied to operation of hot stamping parts (or a specific portion of the corresponding part) requiring relatively high corrosion resistance.

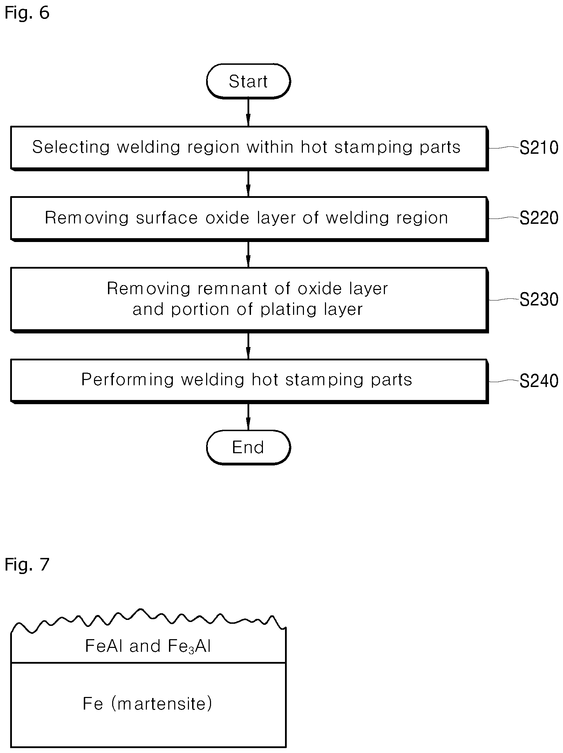

FIG. 6 is a flow chart of a method for improving the weldability of hot stamping parts according to the present invention.

A method for improving the weldability of hot stamping parts in accordance with the present invention may be achieved by carrying out selecting welding region step (S210), removing surface oxide layer step (S220), removing portion of oxide layer and plating layer step (S230), and welding step (S240).

Selecting welding region step (S210) is a step where a welding region on a hot stamping part manufactured with an Al-Si plated steel sheet is selected.

For a detailed example, a center-pillar (10 of FIG.1), which is an example of a hot stamping part, shown in FIG. 1 may be referred. Positions (P) where a number of nuts (not shown) are to be welded is determined inside a center-pillar (10 of FIG.1), and a welding region is selected limited selected limited to a surrounding of these areas.

This selecting welding region step (S210) is identical to the selecting welding region step (S110 of FIG. 4) described above, and repetitive description is skipped.

Removing surface oxide layer step (S220) is a step removing surface oxide layer of a welding region of a hot stamping part.

In this step, Al oxide layer formed on a surface of hot stamping parts with Al-Si plated steel sheets as its material is removed, and thickness of surface oxide layer is formed between about 5 to 100nm.

Removing portion of oxide layer and plating layer step (S230) is a step performed in sequence with the described removing surface oxide layer step (S220).

These removing surface oxide layer step (S220) and removing portion of oxide layer and plating layer step (S230) may use grinders or use laser devices.

And remaining portion of oxide layer (FeAl₂, FeAl(Si)) formed below a surface oxide layer, and portions of plating layer of FeAl and Fe₃Al formed below it may be removed through this step.

A simplified cross sectional structure of a hot stamping part with surface oxide layer, a portion of oxide layer and plating layer removed may be identified referring FIG. 7. That is, Fe(martensite), and only plating layer of FeAl and Fe₃Al exist from the cross sectional view of the illustrated hot stamping part.

Welding step (S240) is a step where welding is performed on a welding region of a hot stamping part with surface oxide layer, a portion of oxide layer and plating layer removed from the previous step.

According to the method of improving the weldability performed through the described steps, as entire oxide layer and a portion of plating layer is removed, high effect of improving weldability may be obtained while obtaining corrosion resistance.

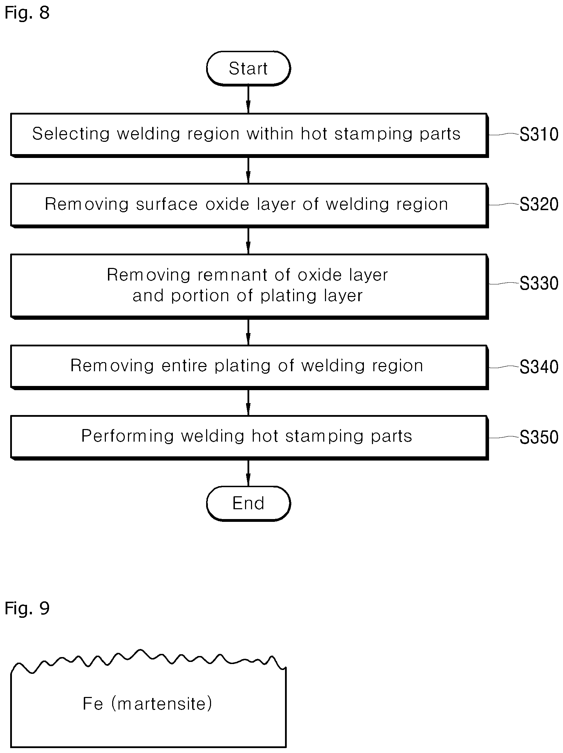

FIG. 8 is a flow chart of a method which is not part of the present invention This method which is not part of the present invention may be achieved by carrying out selecting welding region step (S310), removing surface oxide layer step (S320), removing portion of oxide layer and plating layer step (S330), removing entire plating layer step (S340), and welding step (S350).

Selecting welding region step (S310) is a step where a welding region on a hot stamping part manufactured with Al-Si plated steel sheet is selected.

For a detailed example, a center-pillar (10 of FIG.1), which is an example of a hot stamping part, shown in FIG. 1 may be referred. Positions (P) where a number of nuts (not shown) are to be welded is determined inside a center-pillar (10 of FIG.1), and a welding region is selected limited selected limited to a surrounding of these areas.

This selecting welding region step (S310) is identical to a selecting welding region steps described above, and repetitive description is skipped.

Removing surface oxide layer step (S320) is a step removing surface oxide layer of a welding region of a hot stamping part. In this step, Al oxide layer formed on a surface of hot stamping parts with Al-Si plated steel sheets as its material is removed, and thickness of surface oxide layer is formed between about 5 to 100nm.

Removing portion of oxide layer and plating layer step (S330) is a step performed with/or in sequence with the described removing surface oxide layer step (S320).

Removing entire plating layer step (S340), contrary to the method according to the present invention described above, is a step entirely removing remnant plating layer on a welding region of a hot stamping part. Through this step, surface oxide layer (Al oxide layer), and rest of the oxide layer (FeAl₂, FeAl(Si)) formed below it, and also, plating layer of FeAl and Fe₃Al is entirely removed.

A simplified cross sectional structure of a hot stamping part after removing entire plating layer step (S340) is performed may be identified through FIG. 9. Referring to FIG. 9, only Fe (martensite) is left.

Welding step (S350) is a step where welding is performed on a welding region of a hot stamping part with only Fe (martensite) left.

As such, when entire oxide layer and a portion of plating layer is removed corresponding to a welding region of a hot stamping part according to the described method, effect of improving weldability may be maximized but corrosion resistance relatively degrades.

For performing sectional oxide layer and/or plating layer removal of welding region of hot stamping parts, grinder devices may be used or laser devices may be used.

Also, when sectional oxide layer and portion of plating layer is removed corresponding to a welding region of hot stamping parts, effect of high improvement of weldability may be obtainable while obtaining corrosion resistance at a certain level.

A method for improving the weldability of hot stamping parts according to a preferable embodiment of the present invention has been described herein.

## Claims

1. A method for improving the weldability of hot stamping parts, comprising :
providing a hot stamping part with a surface oxide layer formed by hot stamping an Al-Si plated steel sheet;
selecting a welding region in the hot stamping part (S210) ;
removing the surface oxide layer of the welding region (S220) ;
removing remnant of oxide layer and portion of plating layer of the welding region (S230) ; and
performing welding on a welding region with a remaining portion of the plating layer on a hot stamping part with remnant of oxide layer and portion of plating layer removed (S240) thereby improving weldability of the hot stamping parts with obtaining corrosion resistance.

2. A method for improving the weldability of hot stamping parts according to claim 1, wherein the hot stamping part is a material of Al-Si plated steel sheet and welding is performed on the welding region using projection welding.

3. A method for improving the weldability of hot stamping parts according to claim 1, wherein the hot stamping part is a material of Al-Si plated steel sheet and welding is performed on the welding region using projection welding, and a grinder is used or laser grinder is used when removing surface oxide layer and removing remnant of oxide layer and portion of plating layer.

## Patentansprüche

1. Verfahren zur Verbesserung der Schweißbarkeit von Heißprägeteilen, umfassend:
Bereitstellen eines Heißprägeteils mit einer Oberflächenoxidschicht gebildet durch Heißprägung eines Al-Si-plattierten Stahlblechs;
Auswählen eines Schweißbereichs in dem Heißprägeteil (S210);
Entfernen der Oberflächenoxidschicht des Schweißbereichs (S220);
Entfernen des Überrests der Oxidschicht und des Teils der Plattierungsschicht des Schweißbereichs (S230); und
Durchführen des Schweißens in einem Schweißbereich mit einem restlichen Teil der Plattierungsschicht auf einem Heißprägeteil, wobei der Überrest der Oxidschicht und der Teil der Plattierungsschicht entfernt (S240) werden, wodurch die Schweißbarkeit der Heißprägeteile mit der Erzielung einer Korrosionsbeständigkeit verbessert wird.

2. Verfahren zur Verbesserung der Schweißbarkeit von Heißprägeteilen nach Anspruch 1, wobei der Heißprägeteil ein Material eines Al-Si-plattierten Stahlblechs ist, und das Schweißen durch die Verwendung des Buckelschweißens in dem Schweißbereich durchgeführt wird.

3. Verfahren zur Verbesserung der Schweißbarkeit von Heißprägeteilen nach Anspruch 1, wobei der Heißprägeteil ein Material des Al-Si-plattierten Stahlblechs ist, und das Schweißen durch die Verwendung des Buckelschweißens in dem Schweißbereich durchgeführt wird, und beim Entfernen der Oberflächenoxidschicht und Entfernen des Überrests der Oxidschicht und des Teils der Plattierungsschicht eine Schleifvorrichtung verwendet wird oder eine Laser-Schleifvorrichtung verwendet wird.

## Revendications

1. Procédé d'amélioration de la soudabilité de parties d'estampage à chaud, comprenant :
la fourniture d'une pièce d'estampage à chaud avec une couche d'oxyde de surface formée par l'estampage à chaud d'une tôle d'acier plaquée de Al-Si ;
la sélection d'une région de soudure dans la pièce d'estampage à chaud (S210) ;
l'enlèvement de la couche d'oxyde de surface de la région de soudage (S220) ;
l'enlèvement de résidus de la couche d'oxyde et de la partie de la couche de placage de la région de soudage (S230) ; et
la mise en oeuvre du soudage sur une région de soudage avec la partie restante de la couche de placage sur une pièce d'estampage à chaud avec des résidus de la couche d'oxyde et la partie de la couche de placage enlevés (S240) ainsi améliorant la soudabilité des parties d'estampage à chaud avec une résistance à corrosion obtenue.

2. Procédé d'amélioration de la soudabilité de parties d'estampage à chaud selon la revendication 1, dans lequel la pièce d'estampage à chaud est un matériau constitué d'une tôle d'acier plaquée de Al-Si, et le soudage est effectué sur la région de soudage à l'aide d'un soudage par projection.

3. Procédé d'amélioration de la soudabilité de parties d'estampage à chaud selon la revendication 1, dans lequel la pièce d'estampage à chaud est un matériau constitué d'une tôle d'acier plaquée de Al-Si, et le soudage est effectué sur la région de soudage à l'aide d'un soudage par projection, et un broyeur est utilisé ou un broyeur laser est utilisé lors de l'enlèvement de la couche d'oxyde de surface et de l'enlèvement des résidus de la couche d'oxyde et de la partie de la couche de placage.
